# FASCICULE DE BREVET EUROPEEN

(11) **EP 1 990 558 B1**
(45) Date de publication et mention de la délivrance du brevet: **23.06.2010**
(21) Numéro de dépôt: 08155829.8
(22) Date de dépôt: 07.05.2008
(51) Int. Cl.: F16H 25/24, B64C 13/28

(54) **Liaison mécanique fusible entre deux écrous sur un ensemble à vis de sécurité à défaillance**
Mechanische Sicherungsverbindung zwischen zwei Muttern auf einer Anordnung mit Ausfallsicherheitsschrauben
Fusible mechanical link between two nuts on a fail-safe screw assembly

(30) Priorité: 11.05.2007 FR 0755040
(43) Date de publication de la demande: 12.11.2008
(73) Titulaire: Goodrich Actuation Systems SAS, 78530 Buc (FR)
(72) Inventeur: Port-Robach, Isabelle, 95170, DEUIL LA BARRE (FR); Medina, Raphaël, 95440, ECOUEN (FR); Dorval, Christian, 92700, COLOMBES (FR); Amaral, Rui, 60530, MORANGLES (FR)
(74) Mandataire: Callon de Lamarck, Jean-Robert

(56) Documents cités:
- EP-A- 1 398 542
- DE-A1- 10 348 320
- DE-B- 1 294 132
- FR-A- 2 885 396

## Description

L'invention concerne une liaison mécanique entre un écrou primaire et un écrou secondaire dits « de sécurité à défaillance » (ou encore « fail safe » selon la terminologie anglaise), ainsi que l'ensemble ainsi formé.

L'invention trouve notamment avantageusement une application dans le cas d'actionneur de type THSA (« Trimmable Horizontal Stabilizer Actuator » ou actionneur de plan horizontal réglable) équipant des aéronefs. Ces actionneurs comportent deux voies mécaniques, l'une primaire, l'autre secondaire, cette dernière étant destinée à reprendre l'effort lorsqu'une défaillance apparaît dans la voie primaire. Chacune des voies primaire et secondaire est associée à un écrou respectivement primaire et secondaire.

En fonctionnement normal sur la voie primaire, les efforts transitent par l'écrou primaire vers une vis à billes ou à rouleaux, depuis un plan horizontal variable d'un aéronef, et inversement. L'écrou secondaire est lié mécaniquement à l'écrou primaire afin de suivre celui-ci dans ses mouvements de translation le long de la vis à billes ou à rouleaux, tout en ne subissant aucune contrainte d'effort. Pour cela, l'écrou secondaire comporte, d'une part, un filetage complémentaire du filetage de la vis à billes ou à rouleaux mais présentant un jeu avec celui-ci, et, d'autre part, est lié à l'écrou primaire par l'intermédiaire d'un pion fusible monté radialement, perpendiculairement à l'axe de la vis. Le pion, tout en assurant le suivi de l'écrou primaire par l'écrou secondaire, permet de conserver le jeu entre les filetages de l'écrou secondaire et de la vis afin qu'il n'y ait aucun contact entre eux en fonctionnement normal.
En cas de défaillance de la voie primaire, en particulier au niveau de l'écrou primaire, les efforts transitent dans un premier temps depuis le plan horizontal variable de l'aéronef par l'écrou primaire vers l'écrou secondaire à travers le pion. Le jeu entre les filetages de l'écrou secondaire et de la vis est rattrapé, déclenchant la transmission des efforts précédents de l'écrou secondaire vers la vis. Toutefois, lorsque les efforts qui transitent sont supérieurs à la valeur d'une charge prédéterminée, le pion joue alors le rôle de fusible et rompt, libérant ainsi l'écrou secondaire de l'écrou primaire. Dès lors, les efforts transitent depuis le plan horizontal variable vers la vis à travers l'écrou secondaire, mettant en oeuvre la voie secondaire de l'actionneur.

Il ressort de la technologie du pion fusible un inconvénient décrit ci-après. Lors de l'assemblage des deux écrous sur la vis, il est nécessaire d'utiliser un appareillage complexe afin de maintenir les deux écrous dans une position relative l'un par rapport à l'autre de manière à ce que le jeu précis entre le filetage de l'écrou secondaire et le filetage de la vis soit présent. Ainsi, le logement du pion est contrepercé à travers les deux écrous et le pion est mis en place. Cette opération est longue et coûteuse.

Un but de l'invention est de proposer un ensemble formé de l'écrou primaire et de l'écrou secondaire dont l'assemblage est simplifié, plus rapide, tout en assurant une fiabilité optimale en cas de fonctionnement à défaillance de l'écrou primaire.

A cet effet, il est prévu, selon l'invention, un ensemble comportant un premier et un deuxième écrous, destinés à coopérer avec une vis notamment équipant un vérin de plan horizontal réglable pour aéronef, et une liaison mécanique entre le premier et le deuxième écrou comportant un moyen d'entraînement fusible du deuxième écrou par le premier écrou, la liaison mécanique comportant en outre un moyen d'espacement formant cale permettant un ajustement d'un espacement entre le premier et le deuxième écrou.

Ainsi, l'utilisation dans la liaison mécanique d'un moyen d'espacement formant cale entre le premier et le deuxième écrou permet de positionner de manière rapide, simple et sûre en respectant le jeu précis désiré sans que cela nécessite un outillage lourd et coûteux, aussi bien financièrement que temporellement, pour réaliser la liaison mécanique entre les deux écrous.

Avantageusement, mais facultativement, l'ensemble comporte au moins l'une des caractéristiques suivantes :
- le moyen d'espacement réglable est une cale ajustable en épaisseur.
- le moyen d'espacement réglable est une cale pelable ou séparable.
- le moyen d'entraînement fusible comporte une biellette fusible ancrée dans le premier écrou et s'étendant dans le deuxième écrou.
- la biellette est orientée sensiblement parallèlement à un axe du deuxième écrou.
- la biellette est vissée dans le premier écrou.
- la biellette comporte une portion présentant une section dimensionnée pour rompre sous une charge prédéterminée.
- la biellette comporte une portion présentant une section dimensionnée pour rompre avec un allongement prédéterminé.
On prévoit aussi, selon l'invention, un vérin de plan horizontal réglable pour aéronef comportant un ensemble présentant au moins l'une des caractéristiques précédentes.

D'autres caractéristiques et avantages de l'invention ressortiront encore de la description qui suit, laquelle est purement illustrative et non limitative, et doit être lue en regard des dessins annexés, sur lesquels :
- la figure 1 est une représentation en trois dimensions d'un ensemble selon l'invention, d'un écrou primaire et d'un écrou secondaire selon un premier mode de réalisation ;
- la figure 2 est une vue en coupe longitudinale selon II-II de l'ensemble selon le premier mode de réalisation ;
- la figure 3 est une vue de dessus du premier mode de réalisation de l'ensemble selon l'invention ; et
- La figure 4 est une vue partielle en trois dimensions d'un ensemble selon un second mode de réalisation de l'invention.

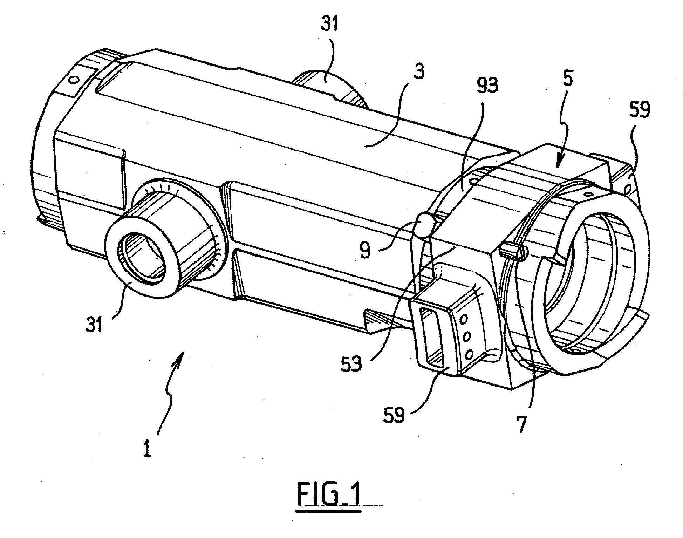

En référence aux figures 1 à 3, nous allons décrire maintenant un premier mode de réalisation de l'invention.
Un ensemble selon l'invention comporte deux écrous (3) et (5). L'écrou (3) est appelé écrou primaire, alors que l'écrou (5) est appelé écrou secondaire.
L'ensemble (1) présente un axe longitudinal X. Il est apte à être monté sur une vis non représentée et s'étendant selon l'axe X.
L'écrou primaire (3) présente sur une surface externe des moyens (31) de liaison avec un plan horizontal réglable selon une voie primaire, non représentés tous deux, dans le cadre d'un actionneur THSA pour un aéronef. A l'une de ses extrémités, l'écrou primaire (3) comporte un collier (93). Ce collier (93) comporte des orifices (33) aptes à recevoir un pion (9) qui sera décrit ultérieurement. L'écrou primaire (3) peut être un écrou à billes ou à rouleaux destiné à être monté sur une vis dite à billes ou à rouleaux respectivement.

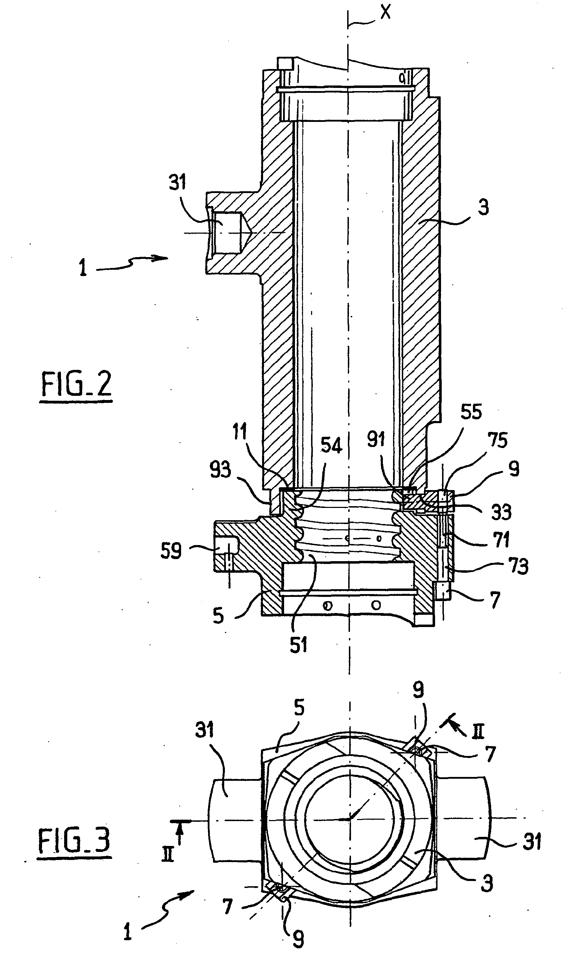

L'écrou secondaire (5) présente sur une surface externe des moyens de liaison (59) avec le plan horizontal réglable à travers une voie dite secondaire, tous deux non représentés, dans le cadre d'un actionneur THSA pour aéronef. Dans un alésage interne traversant selon l'axe X, l'écrou secondaire (5) comporte un filetage (51). Ce filetage (51) est complémentaire dans sa forme au filetage de la vis sur lequel il est destiné à être monté, assemblé à l'écrou primaire (3). D'autre part, ce filetage (51), bien que complémentaire au filetage de la vis sur lequel il est destiné à être monté, présente des dimensions de manière à ce qu'une fois monté, le filetage (51) de l'écrou présente un jeu avec le filetage de la vis sur lequel il est monté. A l'une de ses extrémités, l'écrou secondaire (5) présente un collier (54) apte à être reçu par le collier (93) de l'écrou primaire (3), comme cela est illustré à la figure 2. Le collier (54) présente des ouvertures (55) aptes à recevoir, lors d'un montage de l'écrou secondaire (5) sur l'écrou primaire (3), le pion (9) précité. Angulairement, au droit de ces ouvertures (55), l'écrou secondaire (5) comporte des excroissances (53) s'étendant radialement extérieurement en saillie de sa surface externe et dans lequel est aménagé un trou traversant parallèle sensiblement à l'axe X de l'écrou secondaire (5). Le trou traversant est apte à recevoir une biellette (7) qui sera décrite ultérieurement. II est à noter que les orifices (33) du collier (93) de l'écrou primaire (3), les ouvertures (55) du collier (54) de l'écrou secondaire (5) ainsi que les excroissances (53) vont ici, tel qu'illustré, par paires situées de manière diamétralement opposée par rapport à l'axe X de l'ensemble (1).
L'ensemble (1) comporte en outre une cale (11) interposée entre l'écrou primaire (3) et l'écrou secondaire (5). Le rôle de cette cale (11) est d'assurer le positionnement relatif précis entre l'écrou primaire (3) et l'écrou secondaire (5). L'épaisseur de la cale (11) est calculée de manière à ce que, une fois les deux écrous montés sur la vis non représentée, un jeu apparaît entre le filetage (51) de l'écrou secondaire (5) et le filetage de la vis sur lequel l'ensemble (1) est monté. Ce jeu permet, lors d'un fonctionnement normal sans défaillance de l'ensemble (1) monté sur la vis, qu'il n'y ait aucun contact entre le filetage (51) de l'écrou secondaire (5) et le filetage de la vis. La cale (11) peut être obtenue directement par calcul ou ajustée, par exemple, par reprise d'usinage, par moyen pelable ou par tri, ou tout autre moyen permettant d'assurer le jeu requis.
La cale (11) est, comme illustré en figure 2, située entre une surface d'extrémité du collier (54) et un fond de l'alésage délimité par le collier (93) de l'écrou primaire (3). En variante, la cale (11) est située entre une surface d'extrémité du collier (93) et un rebord sensiblement perpendiculaire à l'axe X de l'écrou secondaire (5) situé au pied du collier (54).

De plus, l'ensemble (1) selon l'invention comporte un pion (9) associé à une biellette (7). Le pion (9) comprend une queue (91) ainsi qu'un orifice fileté perpendiculaire à la queue (91) du pion (9). Le pion (9) est monté de manière radiale par rapport à l'axe X dans l'orifice (33) du collier (93) de l'écrou primaire (3), qu'il traverse, et dans l'ouverture (55) aménagée dans le collier (54) de l'écrou secondaire (5), qui est alors monté sur l'écrou primaire (3) de manière à ce que les ouvertures (55) et les orifices (33) soient en regard les uns des autres. Le pion (9) ainsi monté, l'orifice fileté perpendiculaire à la queue (91) du pion (9) se trouve en regard du trou traversant de l'excroissance (53). Dès lors, une biellette (7) est introduite dans cet orifice, comme cela est illustré en figure 2. La biellette (7) est de forme générale de révolution et comporte successivement une tête (7) dont le diamètre est supérieur à un diamètre du trou traversant de l'excroissance (53) dans lequel elle est reçue, puis une portion cylindrique de révolution lisse (73) dont le diamètre est légèrement inférieur au diamètre du trou traversant dans lequel la biellette (7) est reçue, puis une portion (71) présentant un diamètre réduit, puis enfin, une portion filetée (75) apte à être vissée dans l'orifice fileté du pion (9). La portion (71) de la biellette (7) présente une section dimensionnée de manière à ce que, lors d'un effort de traction prédéterminé exercé entre la portion filetée (75) et la tête (7), la portion (71) rompt. Cette rupture survient après un allongement prédéterminé fonction de la section de la portion (71) subissant ledit effort de traction prédéterminé.

Le montage de l'ensemble (1) comprend l'écrou primaire (3), la cale (11) et l'écrou secondaire (5), qui sont empilés les uns sur les autres. Les orifices (33) sont mis en regard des ouvertures (55) pour permettre le montage des pions (9). Enfin, les biellettes (7) sont introduites dans le trou traversant des excroissances (53) et sont vissées dans l'orifice fileté des pions (9) de manière à maintenir l'empilement de l'écrou primaire (3), de la cale (11) et de l'écrou secondaire (5) durant un fonctionnement normal. Mais l'effort de traction engendré par le serrage des biellettes (7) pour maintenir l'empilement devra être négligeable par rapport à l'effort de traction de rupture prédéterminé de la portion (71) des biellettes (7).

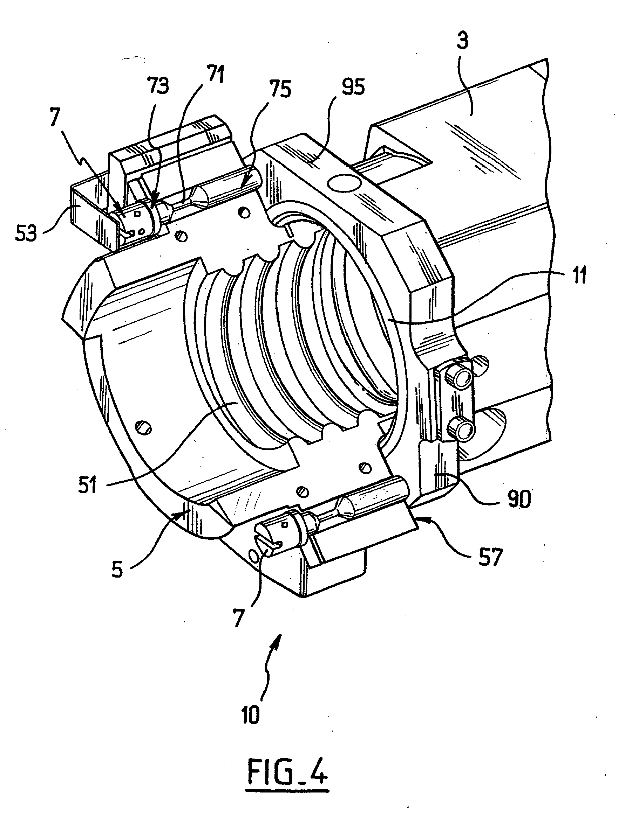

Nous allons maintenant, en référence à la figure 4, décrire un deuxième mode de réalisation d'un ensemble selon l'invention. Nous allons simplement décrire les différences entre ce deuxième mode de réalisation et le premier mode de réalisation de l'invention qui vient d'être décrit. La différence principale provient du collier (90) de l'écrou primaire (3) qui se différencie du collier (93) de l'écrou primaire (3) du mode de réalisation précédent. Le collier (90) présente des excroissances (95) s'étendant en saillie vers l'extérieur de manière radiale par rapport à l'axe X. Ces excroissances (95) permettent de s'affranchir, dans ce mode de réalisation, des pions (9) du premier mode de réalisation précédemment décrit. Ces excroissances (95) présentent donc un orifice fileté apte à recevoir par vissage la portion (75) filetée de la biellette (7). La cale (11) est montée entre l'écrou secondaire (5) et l'écrou primaire (3) selon la variante de montage décrite lors du premier mode de réalisation : entre une surface d'extrémité du collier (95) et un rebord de l'écrou (5) s'étendant radialement vers l'extérieur de manière perpendiculaire à l'axe X au pied du collier (54).
D'autre part, l'ensemble (10) comporte des moyens de retenue (53). Ces moyens de retenue (53) permettent de maintenir en place la tête (7) et la portion (73) de la biellette (7) lorsque la portion (71) de la biellette (7) s'est rompue sous l'effet d'un effort de traction prédéterminé. Cela évite, lorsqu'il y a rupture, que cette partie de la biellette (7) n'aille endommager, en s'échappant, d'autres organes de l'aéronef sur lequel l'ensemble (10) est installé.

Dans les deux modes de réalisation, lorsqu'il y a défaillance de l'écrou primaire (3) conduisant à une perte de liaison entre l'écrou primaire (3) et la vis, il y a un changement dans le cheminement des efforts provenant du plan horizontal réglable.
Dans un premier temps, suivant la perte de liaison écrou primaire/vis, les efforts provenant du plan horizontal réglable transitent toujours par la voie primaire vers l'écrou primaire (3), puis via les biellettes (7) vers l'écrou secondaire (5). Le jeu entre les filetages de l'écrou secondaire et la vis est alors rattrapé, les filetages entrant en contact mutuel. Et les efforts sont transmis à la vis par l'écrou secondaire (5).
Dans un deuxième temps, dès que les efforts provenant du plan horizontal réglable atteignent une valeur supérieure à l'effet de traction de rupture de la portion (71) des biellettes (7), ces dernières rompent, désolidarisant l'écrou secondaire (5) de l'écrou primaire (3). Dès lors, les efforts provenant du plan horizontal réglable transitent directement via la voie secondaire vers l'écrou secondaire (5) et de là, vers la vis.

## Revendications

1. Ensemble (1, 10) comportant au moins un premier (3) et un deuxième (5) écrou destinés à coopérer avec une vis notamment équipant un vérin de plan horizontal réglable pour aéronef, et une liaison mécanique entre le premier et le deuxième écrou comportant un moyen d'entraînement fusible (7, 9) du deuxième écrou par le premier écrou, **caractérisé en ce que** la liaison mécanique comporte en outre un moyen d'espacement formant cale (11) permettant un ajustement d'un espacement entre le premier et le deuxième écrou.

2. Ensemble selon la revendication 1 **caractérisé en ce que** le moyen d'espacement est une cale ajustable en épaisseur.

3. Ensemble selon la revendication 1 ou 2 **caractérisé en ce que** le moyen d'espacement est une cale pelable ou séparable.

4. Ensemble selon la revendication 1 ou 2 **caractérisé en ce que** le moyen d'espacement est une cale triée.

5. Ensemble selon l'une des revendications 1 à 3 **caractérisé en ce que** le moyen d'entraînement fusible comporte une biellette fusible (7) ancrée dans le premier écrou et s'étendant dans le deuxième écrou.

6. Ensemble selon la revendication 5 **caractérisé en ce que** la biellette est orientée sensiblement parallèlement à un axe (X) du deuxième écrou.

7. Ensemble selon la revendication 5 ou 6 **caractérisé en ce que** la biellette est vissée dans le premier écrou.

8. Ensemble selon l'une des revendications 5 à 7 **caractérisé en ce que** la biellette comporte une portion (71) présentant une section dimensionnée pour rompre sous une charge prédéterminée.

9. Ensemble selon l'une des revendications 5 à 8 **caractérisé en ce que** la biellette comporte une portion (71) présentant une section dimensionnée pour rompre avec un allongement prédéterminé.

10. Vérin de plan horizontal réglable pour aéronef **caractérisé en ce qu'**il comporte un ensemble (1, 10) selon l'une des revendications 1 à 9

## Claims

1. Assembly (1, 10) comprising at least one first (3) and one second (5) nut intended to cooperate with a screw in particular provided in an adjustable tailplane actuator for an aircraft, and a mechanical connection between the first and the second nut comprising means for fusible driving (7, 9) of the second nut by the first nut, in which the mechanical connection also comprises spacing means forming a wedge (11) enabling a spacing adjustment between the first and second nuts.

2. Assembly according to claim 1, **characterized in that** the spacing means are constituted by a wedge capable of being adjusted in thickness.

3. Assembly according to claim 1 or 2, **characterized in that** the spacing means are constituted by a pealable or separable wedge.

4. Assembly according to claim 1 or 2, **characterized in that** the spacing means are constituted by a graded wedge.

5. Assembly according to one of claims 1 to 3, **characterized in that** the fusible driving means comprise a fusible link 7 anchored in the first nut and extending into the second nut.

6. Assembly according to claim 5, **characterized in that** the link is substantially parallel to an axis (X) of the second nut.

7. Assembly according to claim 5 or 6, **characterized in that** the link is screwed into the first nut.

8. Assembly according to one of claims 5 to 7, **characterized in that** the link comprises a portion (71) with cross-section sized so as to break under a predetermined load.

9. Assembly according to one of claims 5 to 8, **characterized in that** the link comprises a portion (71) with a cross-section sized so as to break with a predetermined extension.

10. Adjustable tailplane actuator for an aircraft **characterized in that** it comprises an assembly (1, 10) according to one of claims 1 to 9.

## Patentansprüche

1. Anordnung (1, 10), umfassend mindestens eine erste (3) und eine zweite (5) Mutter, die dazu gedacht sind, mit einer Schraube zusammenzuwirken, die insbesondere einen einstellbaren Horizontalebenen-Zylinder für Luftfahrzeuge ausstattet, und eine mechanische Verbindung zwischen der ersten und zweiten Mutter, die ein schmelzbares Mittel (7, 9) zum Mitnehmen der zweiten Mutter durch die erste Mutter umfasst, **dadurch gekennzeichnet, dass** die mechanische Verbindung ferner ein Abstandsmittel umfasst, das ein Passstück (11) bildet, das eine Anpassung eines Abstands zwischen der ersten und der zweiten Mutter ermöglicht.

2. Anordnung nach Anspruch 1, **dadurch gekennzeichnet, dass** das Abstandsmittel ein in der Dicke anpassbares Passstück ist.

3. Anordnung nach Anspruch 1 oder 2, **dadurch gekennzeichnet, dass** das Abstandsmittel ein abziehbares oder abtrennbares Passstück ist.

4. Anordnung nach Anspruch 1 oder 2, **dadurch gekennzeichnet, dass** das Abstandsmittel ein sortiertes Passstück ist.

5. Anordnung nach einem der Ansprüche 1 bis 3, **dadurch gekennzeichnet, dass** das schmelzbare Mitnahmemittel einen schmelzbaren Schwingarm (7) umfasst, der in der ersten Mutter verankert ist und sich in die zweite Mutter erstreckt.

6. Anordnung nach Anspruch 5, **dadurch gekennzeichnet, dass** der Schwingarm im Wesentlichen parallel zu einer Achse (X) der zweiten Mutter orientiert ist.

7. Anordnung nach Anspruch 5 oder 6, **dadurch gekennzeichnet, dass** der Schwingarm in die erste Mutter eingeschraubt ist.

8. Anordnung nach einem der Ansprüche 5 bis 7, **dadurch gekennzeichnet, dass** der Schwingarm einen Abschnitt (71) umfasst, der einen Querschnitt aufweist, der bemessen ist, um unter einer vorherbestimmten Belastung zu zerbrechen.

9. Anordnung nach einem der Ansprüche 5 bis 8, **dadurch gekennzeichnet, dass** der Schwingarm einen Abschnitt (71) umfasst, der einen Querschnitt aufweist, der bemessen ist, um unter einer vorherbestimmten Dehnung zu zerbrechen.

10. Einstellbarer Horizontalebenen-Zylinder für Luftfahrzeuge, **dadurch gekennzeichnet, dass** er eine Anordnung (1, 10) nach einem der Ansprüche 1 bis 9 umfasst.
